# EUROPEAN PATENT APPLICATION

(11) **EP 1 267 199 A1**
(43) Date of publication of application: **18.12.2002**
(21) Application number: 01305236.0
(22) Date of filing: 15.06.2001
(51) Int. Cl.: G02F 1/13357, G02B 19/00, G02B 17/06, F21V 8/00, G02B 27/09

(54) **Illuminating module using an omnidirectional light source for a display apparatus**

(71) Applicant: Prokia Technology Co., Ltd., Tainan Hsien (TW)
(72) Inventor: Tiao, Kuo-Tung, Hsin-City (TW); Chuang, Fu-Ming, Chu-Tung Chen, Hsin-Chu Hsien (TW)
(74) Representative: Belcher, Simon James

(57) **Abstract**

An illuminating module (2) is adapted for use in a display apparatus, and includes first and second reflectors (31, 32), and an omnidirectional light source (21) . The first reflector (31) has a hemispherical first reflecting surface (311) and a first focal point. The second reflector (32) has a curved second reflecting surface (321) that faces the first reflecting surface (311), and a second focal point that is coincident with the first focal point. The light source (21) is coincident with the first and second focal points. A first portion of light rays from the light source (21) radiates toward the second reflecting surface (321), and is reflected by the second reflecting surface (321) to travel along an optical axis. A second portion of the light rays from the light source (21) initially radiates toward the first reflecting surface (311), and is subsequently reflected by the first reflecting surface (311) back to the light source (21) so as to combine with the first portion of the light rays.

## Description

The invention relates to an illuminating module for a display apparatus, more particularly to an illuminating module that employs a combination of a hemispherical reflector and a parabolic or elliptic reflector to achieve a higher light utilization rate.

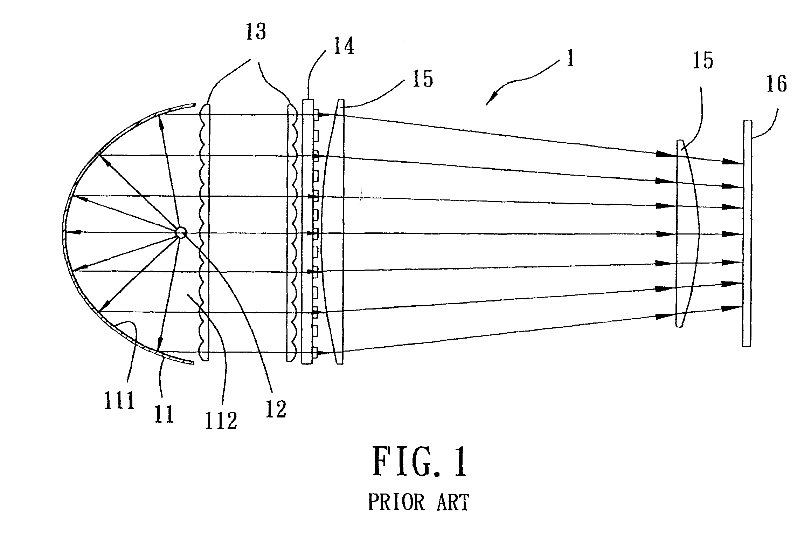

Conventional display apparatuses process light from a light source by performing beam splitting, modulation, synthesis, image formation, etc. The utilization of light has a direct effect on the quality of the images produced and the size of the apparatus. A conventional illuminating module 1 for a display apparatus is shown in Figure 1, and includes, from left to right, a parabolic reflector 11, a light source 12, a light integrator 13, a polarization state converter 14, and two condensers 15. The parabolic reflector 11 has a parabolic reflecting surface 111 facing the light source 12. The reflecting surface 111 confines an opening 112 oriented to the right. The light source 12 is disposed on a focal point of the parabolic reflector 11. Light rays radiated by the light source 12 are initially reflected to the reflecting surface 111 and then travel in parallel lines toward the light integrator 13, which integrates the light rays into evenly distributed light rays. The light rays then pass through the polarization state converter 14 and are condensed by the condensers 15 before being projected on a display panel 16 for displaying desired images.

In the conventional illuminating module 1, although the parabolic reflector 11 can reflect the light rays from the light source 12, in order to achieve an optimum light utilization rate, the size of the parabolic reflector 11 must be sufficient to encompass or surround the light source 12. That is, as illustrated in Figure 1, the parabolic reflector 11 encompasses the light source 12 such that the reflected light rays travel in parallel lines toward the light integrator 13. Due to the relatively large size of the parabolic reflector 11, the light integrator 13 has to be correspondingly enlarged. Besides, to enable the light rays from the light source 12 to project effectively on the display panel 16, which has a relatively small size, a number of condensers 15 have to be disposed between the light integrator 13 and the display panel 16. In other words, although the conventional illuminating module 1 is capable of converting the reflected light rays into parallel light rays by means of the parabolic reflector 11, due to the long arc length of the reflecting surface 111 of the parabolic reflector 11, to avoid waste of light resources, the sizes of the light integrator 13 and the polarization state converter 14 have to be correspondingly increased so as to achieve the desired light convergence. Therefore, to effectively utilize the light rays, the sizes and the number of the components of the conventional illuminating module 1 are relatively large, which goes against the current trend for compact and light products. Besides, larger components entail higher costs.

On the contrary, if a smaller light integrator 13 and a fewer number of condensers 15 are used for the sake of compactness, due to the extensive area covered by the light rays reflected by the parabolic reflector 11, the light integrator 13 cannot effectively receive the light rays from the light source 12, thereby resulting in poor light utilization. In short, the conventional illuminating module 1 cannot achieve compactness with an optimum light utilization rate.

Therefore, the main object of the present invention is to provide an illuminating module for a display apparatus which can effectively reduce the size and weight of components thereof and which includes a hemispherical reflector.

Accordingly, an illuminating module of the present invention is adapted for use in a display apparatus, and includes first and second reflectors, and an omnidirectional light source. The first reflector has a hemispherical first reflecting surface and a first focal point. The second reflector has a curved second reflecting surface that faces the first reflecting surface, and a second focal point that is coincident with the first focal point. The light source is coincident with the first and second focal points. A first portion of light rays from the light source radiates toward the second reflecting surface, and is reflected by the second reflecting surface to travel along an optical axis. A second portion of the light rays from the light source initially radiates toward the first reflecting surface, and is subsequently reflected by the first reflecting surface back to the light source so as to combine with the first portion of the light rays.

Other features and advantages of the present invention will become apparent in the following detailed description of the preferred embodiments with reference to the accompanying drawings, of which:
Figure 1 is a schematic view of an illuminating module for a display apparatus of the prior art;
Figure 2 is a schematic view of the first preferred embodiment of an illuminating module for a display apparatus according to the present invention;
Figure 3 is a schematic view of the second preferred embodiment of an illuminating module for a display apparatus according to the present invention;
Figure 4 is a schematic view of the third preferred embodiment of an illuminating module for a display apparatus according to the present invention;
Figure 5 is a schematic view of the fourth preferred embodiment of an illuminating module for a display apparatus according to the present invention; and
Figure 6 is a schematic view of the fifth preferred embodiment of an illuminating module for a display apparatus according to the present invention.

Before the present invention is described in greater detail, it should be noted that like elements are denoted by the same reference numerals throughout the disclosure.

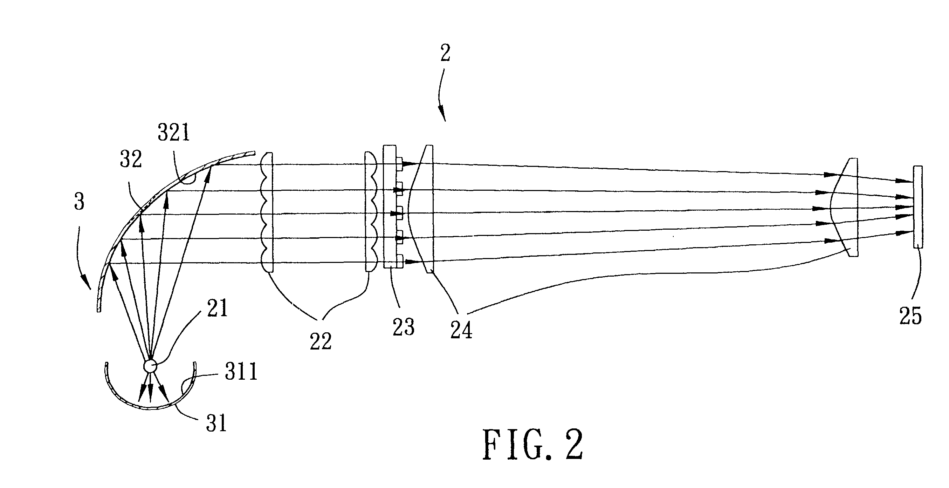

Referring to Figure 2, the first preferred embodiment of an illuminating module 2 according to the present invention forms a part of a display apparatus and is shown to include an omnidirectional light source 21, a reflector assembly 3, a light integrator 22, a polarization state converter (or P/S state converter) 23, and a condenser set 24.

The light source 21 is in the form of an arc lamp, such as a high-voltage mercury lamp, a xenon arc lamp, etc., that serves as a point-light source.

In this embodiment, the reflector assembly 3 includes a first reflector 31 in the form of a hemispherical reflector, and a second reflector 32 in the form of a parabolic reflector. The first reflector 31 has a hemispherical first reflecting surface 311 oriented toward the light source 21. The distance between the light source 21 and any one point on the first reflecting surface 311 is the same, i.e., the light source 21 is coincident with a first focal point of the first reflecting surface 311. The second reflector 32 has a parabolic second reflecting surface 321 oriented toward the light source 21 and the first reflecting surface 311. The light source 21 is further coincident with a second focal point of the second reflecting surface 321. When the light source 21 radiates light, a first portion of the light rays from the light source 21 radiates toward the second reflecting surface 321 to travel in parallel lines along an optical axis, whereas a second portion of the light rays from the light source 21 initially radiates toward the first reflecting surface 311 and is subsequently reflected by the first reflecting surface 311 back to the light source 21 and to the second reflecting surface 321 so as to combine with the first portion of the light rays and to travel in parallel lines along the optical axis.

The light integrator 22 is in the form of a lens array integrator, and is disposed on the optical axis so as to receive the light rays from the second reflecting surface 321 and to integrate the same into evenly distributed light.

The polarization state converter 23 is disposed on the optical axis between the light integrator 22 and the condenser set 24, and is capable of converting the polarization state of light rays that pass therethrough from P-polarization to S-polarization or from S-polarization to P-polarization in a known manner so as to achieve effective utilization of the light rays.

The condenser set 24 is disposed on the optical axis so as to receive the light rays passing through the light integrator 22 and the polarization state converter 23, and is adapted to project the light rays on a display panel 25 for displaying images on the latter. The condenser set 24 is in the form of a positive lens set, and the number of condenser lenses in the condenser set 24 can vary as desired. In this embodiment, two condenser lenses are provided, but one will be sufficient to achieve the intended effect.

In this embodiment, when the light source 21 radiates light, the first portion of the light rays will radiate toward the second reflecting surface 321 directly and will be reflected thereby to travel along the optical axis toward the light integrator 22, whereas the second portion of the light rays that radiate toward the first reflector 31 will be initially reflected by the first reflecting surface 311 back to the second reflecting surface 321 and will then be directed toward the light integrator 22. The light integrator 22 integrates the combined light rays into evenly distributed light rays for passage through the polarization state converter 23, which converts the light rays into the desired polarization state. The light rays travel further to the condenser set 24, and are converged thereby so that the area encompassed thereby can be reduced to correspond to the size of the display panel 25. In other words, this embodiment utilizes the parabolic second reflector 32, which confronts the light integrator 22, and the hemispherical first reflector 31, which reflects light rays back to the second reflector 32, to reduce the area of distribution of light rays outputted by the reflector assembly 3, thereby permitting a reduction in the size of the display apparatus.

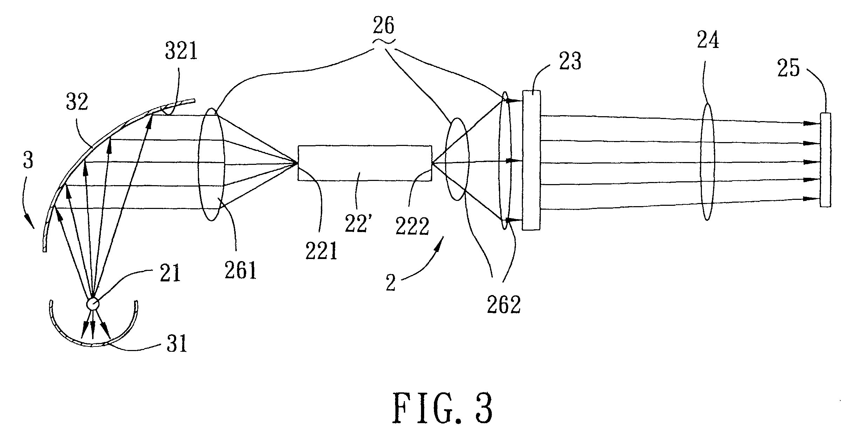

Referring to Figure 3, the second preferred embodiment of an illuminating module 2 according to the present invention is shown to include a light source 21, a reflector assembly 3, a lens assembly 26, a light integrator 22', a polarization state converter 23, and a condenser set 24. The construction of the light source 21, the reflector assembly 3, the polarization state converter 23, and the condenser set 24 are substantially the same as those of the first preferred embodiment.

In this embodiment, the light integrator 22' is in the form of a glass rod integrator, or a hollow rod with an inner wall surface plated with a reflective film, and is capable of converting the incident light rays into evenly distributed light rays. The light integrator 22' has an input side 221 facing the second reflector 32, and an output side 222 facing the polarization state converter 23.

The lens assembly 26 includes a first lens unit 261 disposed on the optical axis between the second reflector 32 and the input side 221 of the light integrator 22', and a second lens unit 262 having two lenses disposed on the optical axis between the output side 222 of the light integrator 22' and the polarization state converter 23. The first lens unit 261 enables the light rays from the second reflecting surface 321 to converge at the input side 221 of the light integrator 22'. The two lenses of the second lens unit 262 are positive lenses that direct the light rays diverging from the output side 222 of the light integrator 22' toward the polarization state converter 23. By virtue of the light integrator 22' and the lens assembly 26, the parallel light rays generated by the reflector assembly 3 can converge on the display panel 25, which has a relatively small area. In practice, a dichroic beam splitter unit for splitting colors can be disposed between the polarization state converter 23 and the display panel 25.

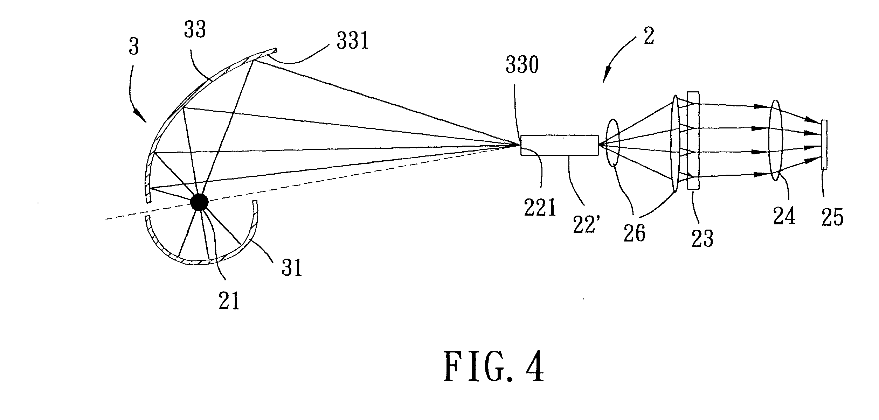

Referring to Figure 4, the third preferred embodiment of an illuminating module 2 according to the present invention is shown to include a light source 21, a reflector assembly 3, a lens unit 26, a light integrator 22' in the form of a glass rod integrator, a polarization state converter 23, and a condenser set 24. The main difference between this embodiment and the second preferred embodiment resides in that the reflector assembly 3 includes a hemispherical first reflector 31 and an elliptic second reflector 33. The second reflector 33 has an elliptic second reflecting surface 331 oriented toward the light source 21, and a second focal point coincident with the light source 21. The second reflector 33 further has a third focal point 330 upon which the light rays from the second reflecting surface 331 converge. The third focal point 330 is coincident with an input side 221 of the light integrator 22'. Such a modification in the configuration of the second reflector 33 can likewise achieve the intended effect.

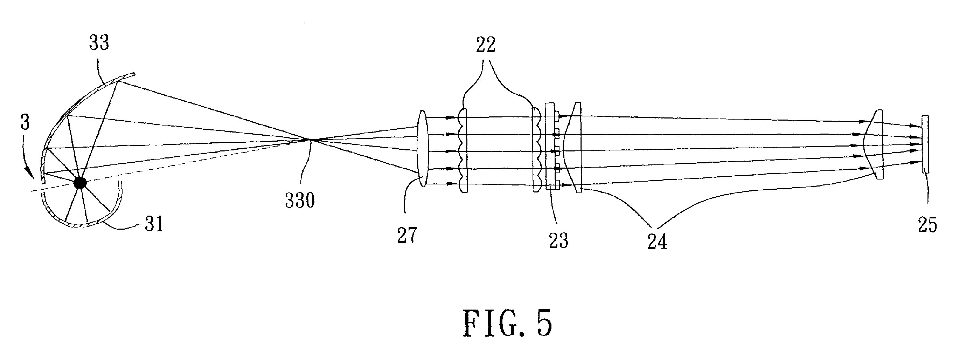

Figure 5 shows the fourth preferred embodiment of an illuminating module according to the present invention. This embodiment is substantially the same as the first preferred embodiment in construction, the main difference residing in that the parabolic second reflector 32 in the first preferred embodiment is substituted by an elliptic second reflector 33, and a positive lens unit 27 is disposed on the optical axis between the light integrator 22, which is in the form of a lens array integrator, and a third focal point 330 upon which the light rays from the second reflector 33 converge. The lens unit 27 has a fourth focal point that is coincident with the third focal point 330 and that is disposed between the second reflector 33 and the lens unit 27, and directs the light rays diverging from the third focal point 330 toward the light integrator 22 in parallel lines. By configuring the fourth focal point of the lens unit 27 to be coincident with the third focal point 330 of the second reflector 33, the intended effect can be achieved.

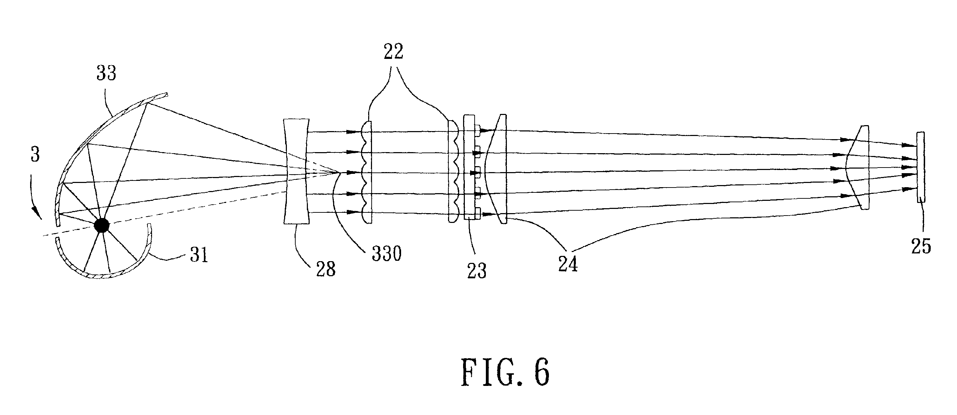

Referring to Figure 6, the fifth preferred embodiment of an illuminating module according to the present invention is shown to be substantially the same as the fourth preferred embodiment in construction, the major difference residing in that a negative lens unit 28 is disposed on the optical axis between the light integrator 22 and the elliptic second reflector 33. The negative lens unit 28 has a focal point that is coincident with the third focal point 330 of the second reflector 33 and that is disposed between the negative lens unit 28 and the light integrator 22.

It can be appreciated from the foregoing that the present invention employs a hemispherical first reflector 31 in combination with a parabolic second reflector 32 or an elliptic second reflector 33 to reflect the light rays radiated from the light source 21. Such a configuration enables almost all of the light rays from the light source 21 to be directed toward and reflected by the parabolic or elliptic second reflector 32 (33). Since the second reflector 32 (33) in the present invention is a parabolic or elliptic segment, the area encompassed by the light rays that are reflected thereby and that travel along the optical axis in parallel lines can be reduced by one half as compared to the conventional illuminating module described beforehand. Hence, the sizes of the components of the illuminating module 2 can be reduced. In addition, under the circumstance that the illuminating module of the present invention and the prior art are equivalent in size, the present invention can achieve a comparatively higher light utilization rate.

## Claims

1. An illuminating module (2) for a display apparatus, said illuminating module (2) being **characterized by**:
a first reflector (31) having a hemispherical first reflecting surface (311) and a first focal point;
a second reflector (32) having a curved second reflecting surface (321) that faces said first reflecting surface (311), and a second focal point that is coincident with said first focal point; and
an omnidirectional light source (21) coincident with said first and second focal points, wherein a first portion of light rays from said light source (21) radiates toward said second reflecting surface (321) and is reflected by said second reflecting surface (321) to travel along an optical axis, and wherein a second portion of the light rays from said light source (21) initially radiates toward said first reflecting surface (311) and is subsequently reflected by said first reflecting surface (311) back to said light source (21) so as to combine with the first portion of the light rays.

2. The illuminating module (2) of Claim 1, **characterized in that** said second reflecting surface (321) is a parabolic reflecting surface.

3. The illuminating module (2) of Claim 2, further **characterized by**:
a light integrator (22) disposed on the optical axis so as to receive the light rays from said second reflecting surface (321); and
a condenser (24) disposed on the optical axis so as to receive the light rays passing through said light integrator (22).

4. The illuminating module (2) of Claim 3, **characterized in that** said light integrator (22) is a lens array integrator.

5. The illuminating module (2) of Claim 3, further **characterized by** a polarization state converter (23) disposed on the optical axis between said light integrator (22) and said condenser (24).

6. The illuminating module (2) of Claim 3, **characterized in that** said light integrator (22) is a rod integrator.

7. The illuminating module (2) of Claim 6, further **characterized by** a first lens unit disposed on the optical axis between said second reflector (32) and said light integrator (22), said first lens unit (261) enabling the light rays from said second reflecting surface (321) to converge at an input side (221) of said light integrator (22').

8. The illuminating module (2) of Claim 7, further **characterized by** a second lens unit (262) disposed on the optical axis between said light integrator (22') and said condenser (24), said second lens unit (262) directing the light rays that diverge from an output side (222) of said light integrator (22') toward said condenser (24).

9. The illuminating module (2) of Claim 8, **characterized in that** said second lens unit (262) is a positive lens unit.

10. The illuminating module (2) of Claim 1, **characterized in that** said second reflecting surface (331) is an elliptic reflecting surface, said second reflector (33) further having a third focal point (330) upon which the light rays from said second reflecting surface (331) converge.

11. The illuminating module (2) of Claim 10, further **characterized by**:
a light integrator (22') disposed on the optical axis so as to receive the light rays from said second reflecting surface (331); and
a condenser (24) disposed on the optical axis so as to receive the light rays passing through said light integrator (22').

12. The illuminating module of Claim 11, **characterized in that** said light integrator (22') is a rod integrator having an input side (221) that is coincident with said third focal point (330).

13. The illuminating module (2) of Claim 12, further **characterized by** a lens unit (26) disposed on the optical axis between said light integrator (22') and said condenser (24), said lens unit (26) directing the light rays that diverge from an output side of said light integrator (22') toward said condenser (24).

14. The illuminating module (2) of Claim 13, **characterized in that** said lens unit (26) is a positive lens unit.

15. The illuminating module of Claim 11, further **characterized by** a polarization state converter (23) disposed on the optical axis between said light integrator (22') and said condenser (24).

16. The illuminating module of Claim 11, **characterized in that** said light integrator (22) is a lens array integrator.

17. The illuminating module of Claim 16, further **characterized by** a lens unit (27) disposed on the optical axis between said second reflector (33) and said light integrator (22), and having a fourth focal point that is coincident with said third focal point (330) and that is disposed between said second reflector (33) and said lens unit (27), said lens unit (27) directing the light rays that diverge from said third focal point (330) toward said light integrator (22).

18. The illuminating module of Claim 17, **characterized in that** said lens unit (27) is a positive lens unit.

19. The illuminating module of Claim 16, further **characterized by** a negative lens unit (28) disposed on the optical axis between said second reflector (33) and said light integrator (22), said negative lens unit (28) having a fourth focal point that is coincident with said third focal point (330) and that is disposed between said negative lens unit (28) and said light integrator (22).
